# EUROPÄISCHE PATENTSCHRIFT

(11) **EP 3 120 077 B1**
(45) Veröffentlichungstag und Bekanntmachung des Hinweises auf die Patenterteilung: **29.04.2020**
(21) Anmeldenummer: 15715144.0
(22) Anmeldetag: 11.03.2015
(51) Int. Cl.: F23D 5/12, F23D 3/40

(54) **VERDAMPFERBRENNER FÜR EIN MOBILES, MIT FLÜSSIGEM BRENNSTOFF BETRIEBENES HEIZGERÄT**
VAPORIZATION BURNER FOR A MOBILE LIQUID FUEL HEATING DEVICE
BRÛLEUR DE VAPORISATION POUR UN DISPOSITIF MOBILE DE CHAUFFAGE À COMBUSTIBLE LIQUIDE

(30) Priorität: 20.03.2014 DE 102014103812
(43) Veröffentlichungstag der Anmeldung: 25.01.2017
(73) Patentinhaber: Webasto SE, 82131 Stockdorf (DE)
(72) Erfinder: DELL, Vitali, 82131 Stockdorf (DE); MÖSL, Klaus, 82131 Stockdorf (DE); SOMMERER, Stefan, 82131 Stockdorf (DE); KERSCHER, Thomas, 82131 Stockdorf (DE)
(74) Vertreter: Ciesla, Bettina
(86) Internationale Anmeldenummer: PCT/DE2015/100099
(87) Internationale Veröffentlichungsnummer: WO 2015/139683

(56) Entgegenhaltungen:
- DE-A1- 1 918 445
- DE-A1- 10 151 617
- DE-A1- 19 529 994
- DE-A1-102004 049 902
- DE-A1-102006 031 867
- DE-B4- 4 447 987

## Beschreibung

Die vorliegende Erfindung betrifft einen Verdampferbrenner für ein mobiles, mit flüssigem Brennstoff betriebenes Heizgerät und ein mobiles Heizgerät mit einem solchen Verdampferbrenner.

In mobilen, mit flüssigem Brennstoff betriebenen Heizgeräten kommen häufig Verdampferbrenner zum Einsatz, bei denen der flüssige Brennstoff verdampft wird, der verdampfte Brennstoff mit zugeführter Brennluft zu einem Brennstoff-Luft-Gemisch vermischt und anschließend unter Freisetzung von Wärme umgesetzt wird.

Unter einem "mobilen Heizgerät" wird im vorliegenden Kontext ein Heizgerät verstanden, das für den Einsatz in mobilen Anwendungen ausgelegt und dementsprechend angepasst ist. Dies bedeutet insbesondere, dass es transportabel ist (ggf. in einem Fahrzeug fest eingebaut oder lediglich für den Transport darin untergebracht) und nicht ausschließlich für einen dauerhaften, stationären Einsatz, wie es beispielsweise bei der Beheizung eines Gebäudes der Fall ist, ausgelegt ist. Dabei kann das mobile Heizgerät auch fest in einem Fahrzeug (Landfahrzeug, Schiff, etc.), insbesondere in einem Landfahrzeug, installiert sein. Insbesondere kann es zur Beheizung eines Fahrzeug-Innenraums, wie beispielsweise eines Land-, Wasser- oder Luftfahrzeugs, sowie eines teiloffenen Raumes, wie er beispielsweise auf Schiffen, insbesondere Yachten, aufzufinden ist, ausgelegt sein. Das mobile Heizgerät kann auch vorübergehend stationär eingesetzt werden, wie beispielsweise in großen Zelten, Containern (zum Beispiel Baucontainern), etc.. Insbesondere kann das mobile Heizgerät als Stand- oder Zuheizer für ein Landfahrzeug, wie beispielsweise für einen Wohnwagen, ein Wohnmobil, einen Bus, einen Pkw, etc., ausgelegt sein.

Im Hinblick auf Umweltgesichtspunkte und die diesbezügliche Gesetzgebung in vielen Ländern wird es immer wichtiger, die Abgasemissionen von mobilen Heizgeräten zu minimieren. Insbesondere bei Verdampferbrennern für mobile Heizgeräte besteht dabei die Schwierigkeit, dass ein Betrieb unter unterschiedlichen äußeren Randbedingungen und in verschiedenen Heizleistungsstufen jeweils möglichst effizient und mit geringen Abgasemissionen erfolgen soll.

DE 195 29 994 A1 beschreibt einen Verdampferbrenner mit Brennkammer für ein Heizgerät. Einem koaxial in die Brennkammer hineinragenden Luftzuführungsstutzen mit radialen Luftaustritten durch die Stutzenwand ist ein Leiteinrichtung für eine Drallstrom-Luftzufuhr vorgeordnet. Der Luftzuführungsstutzen hat eine Abschlussblende für eine axiale Rückströmung von Abgas im Wirbelzentrum der zugeführten Drallstrom-Luft.

DE 1 918 445 A beschreibt einen Vergasungsbrenner mit einer Brennkammer, einem in dieser angeordneten Vergasungskörper aus porösem, hitzebeständigem Material, Einrichtungen zur Zuführung von flüssigem Brennstoff zur Brennkammer, sowie einer elektrischen Zündeinrichtung. Der Vergasungskörper besteht aus einem gesinterten, rostfreien Stahl.

Es ist Aufgabe der vorliegenden Erfindung, einen verbesserten Verdampferbrenner für ein mobiles, mit flüssigem Brennstoff betriebenes Heizgerät und ein verbessertes mobiles Heizgerät mit einem solchen Verdampferbrenner bereitzustellen, die insbesondere unter unterschiedlichen äußeren Betriebsbedingungen einen Betrieb mit sehr geringen Emissionen ermöglichen.

Die Aufgabe wird durch einen Verdampferbrenner für ein mobiles, mit flüssigem Brennstoff betriebenes Heizgerät nach Anspruch 1 gelöst. Vorteilhafte Weiterbildungen sind in den abhängigen Ansprüchen angegeben.

Unter einem Gemischaufbereitungsbereich ist dabei ein Bereich des Verdampferbrenners zu verstehen, in dem im normalen Heizbetrieb des Verdampferbrenners eine Durchmischung von verdampftem Brennstoff mit Brennluft erfolgt, aber keine Umsetzung des Brennstoff-Luft-Gemischs unter Freisetzung von Wärme erfolgt, insbesondere keine Flamme ausgebildet ist. In dem Gemischaufbereitungsbereich kann eine vorteilhafte Aufbereitung des Brennstoff-Luft-Gemisches vor dessen Umsetzung in dem Umsetzungsbereich erfolgen. Unter einem Umsetzungsbereich ist dabei der Bereich des Verdampferbrenners zu verstehen, in dem im Betrieb des Verdampferbrenners eine Umsetzung des Brennstoff-Luft-Gemischs unter Freisetzung von Wärme erfolgt, was insbesondere in einer flammenden Verbrennung erfolgen kann. Es ist jedoch z.B. auch eine Umsetzung in einem flammlosen katalytischen Prozess möglich. Da der Verdampferkörper derart ausgebildet ist, dass er sich in dem Gemischaufbereitungsbereich beabstandet von der Seitenwand in der axialen Richtung erstreckt und die als Brennstoffverdampfungsoberfläche ausgebildete Außenumfangsfläche aufweist, die von der zugeführten Brennluft umströmt wird, wird dabei eine besonders zuverlässige Verdampfung des flüssigen Brennstoffs und Durchmischung des verdampften Brennstoffs mit zugeführter Brennluft zu einem Brennstoff-Luft-Gemisch erzielt. Insbesondere wird die vorteilhafte Durchmischung zu einem homogenen Brennstoff-Luft-Gemisch aufgrund der speziellen Ausgestaltung des Verdampferkörpers für eine relativ große Bandbreite verschiedener Heizleistungsstufen, d.h. verschiedener Brennstoff- und Brennluftzufuhrraten, erreicht. Durch die Ausbildung des homogenen Brennstoff-Luft-Gemischs bereits in dem Gemischaufbereitungsbereich, in dem sich im normalen Betrieb des Verdampferbrenners keine Flamme ausbildet, wird in dem strömungstechnisch nachgeordneten Umsetzungsbereich eine besonders schadstoffarme Verbrennung erreicht.

Gemäß einer Weiterbildung erstreckt sich der Verdampferkörper ausgehend von einer Rückwand des Gemischaufbereitungsbereichs in der axialen Richtung. In diesem Fall kann der flüssige Brennstoff vorteilhaft unmittelbar an der Rückwand des Gemischaufbereitungsbereichs von der Brennstoffzuführung an den Verdampferkörper übergeben werden.

Gemäß einer Weiterbildung ist der Verdampferkörper turmförmig ausgebildet. Insbesondere kann der Verdampferkörper dabei turmförmig von der Rückwand aus in den Gemischaufbereitungsbereich ragen. Bevorzugt kann sich der Verdampferkörper dabei zumindest über einen Großteil der axialen Länge des Gemischaufbereitungsbereichs erstrecken. Die turmförmige Ausbildung des Verdampferkörpers ermöglicht eine gute Umströmung des Verdampferkörpers durch Brennluft über seine gesamte axiale Länge.

Gemäß einer Weiterbildung weist der Verdampferkörper eine im Wesentlichen zylindrische oder hohlzylindrische Form auf. In diesem Fall ist eine besonders kostengünstige Ausgestaltung ermöglicht. Abweichend von einer exakt mathematisch zylindrischen oder hohlzylindrischen Form kann sich der Verdampferkörper z.B. über seine Erstreckung in Richtung des Umsetzungsbereichs auch verjüngen oder aufweiten.

Gemäß einer Weiterbildung weist der Verdampferkörper eine Länge L in der axialen Richtung und eine Breite B senkrecht zu der axialen Richtung auf, für die gilt: L/B > 1,5, bevorzugt L/B > 2. Im Falle einer zylindrischen Ausbildung des Verdampferkörpers entspricht die Breite dabei dem Durchmesser. Im Falle einer anderen Form des Verdampferkörpers der maximalen Ausdehnung in der radialen Richtung senkrecht zur axialen Richtung. Mit anderen Worten ist der Verdampferkörper in diesem Fall in der axialen Richtung wesentlich länger, als er in der Richtung senkrecht zur axialen Richtung breit ist. In dieser Weise wird eine zuverlässige Umströmung des Verdampferkörpers durch Brennluft über eine große axiale Erstreckung ermöglicht, wodurch ein besonders homogenes Brennstoff-Luft-Gemisch bereitgestellt wird. Im vorliegenden Kontext ist eine Bezugnahme auf eine axiale Richtung als auf eine Längsachse des Verdampferbrenners bezogen zu verstehen.

Gemäß einer Weiterbildung ist in dem Verdampferkörper ein elektrisches Heiz- und/oder Glühelement angeordnet. Bei einer Ausbildung als Heizelement ist eine aktive elektrische Beheizung des Verdampferkörpers zur Unterstützung des Verdampfungsprozesses z.B. in einer Startphase des Brennbetriebs ermöglicht. Bei einer Ausbildung als Glühelement kann mit diesem ein Zünden des Brennstoff-Luft-Gemischs zum Starten des Verbrennungsprozesses erfolgen. Bei einem kombinierten Heiz- und Glühelement können beide Funktionalitäten bereitgestellt werden. Insbesondere bei einer Ausbildung als Glühelement oder kombiniertes Heiz- und Glühelement ist es vorteilhaft, wenn es sich bis in den Umsetzungsbereich erstreckt, um dort ein Zünden des Brennstoff-Luft-Gemischs zu bewirken. Das elektrische Heiz- und/oder Glühelement kann z.B. unmittelbar in dem Material des Verdampferkörpers angeordnet sein oder aber z.B. in einem Axialkörper angeordnet sein, an dessen Außenumfangsfläche der Verdampferkörper angeordnet ist.

Es erstreckt sich ein Axialkörper in dem Gemischaufbereitungsbereich entlang einer Längsachse und der Verdampferkörper ist an einer Außenumfangsfläche des Axialkörpers angeordnet. Daher ist eine besonders stabile Positionierung des Verdampferkörpers ermöglicht und über den Axialkörper kann Wärmeenergie zur Unterstützung des Verdampfungsprozesses zu dem Verdampferkörper zugeführt werden.

Gemäß einer Weiterbildung ist der Verdampferkörper stoffschlüssig mit der Außenumfangsfläche des Axialkörpers verbunden. In diesem Fall ist ein besonders guter Wärmeübergang von dem Axialkörper auf den Verdampferkörper ermöglicht. Die stoffschlüssige Verbindung kann dabei insbesondere durch Versintern oder Verschweißen ausgebildet sein, bevorzugt durch Versintern. Alternativ zu einer stoffschlüssigen Verbindung ist z.B. auch ein festes Verschrauben möglich.

Gemäß einer Weiterbildung ist der Axialkörper als Wärmeleitelement ausgebildet, um Wärme aus dem Umsetzungsbereich über Wärmeleitung dem Verdampferkörper zuzuführen. Der Axialkörper kann sich dabei bevorzugt bis in den Umsetzungsbereich oder zumindest bis nahe an den Umsetzungsbereich erstrecken, um zuverlässig Wärme aus dem Umsetzungsbereich dem Verdampfungsprozess zuzuführen. Der Axialkörper ist in diesem Fall aus einem Material mit hoher thermischer Leitfähigkeit gebildet und kann insbesondere aus einem metallischen Material ausgebildet sein.

Gemäß einer Weiterbildung ist in dem Verdampferkörper ein Wärmeleitelement angeordnet, um Wärme aus dem Umsetzungsbereich über Wärmeleitung dem Verdampferkörper zuzuführen. Das Wärmeleitelement kann dabei durch einen Axialkörper gebildet sein, an dessen Außenumfangsfläche der Verdampferkörper angeordnet ist, oder es kann z.B. auch in dem Verdampferkörper selbst oder in einem solchen Axialkörper ein entsprechendes zusätzliches Wärmeleitelement angeordnet sein.

Gemäß einer Weiterbildung ist in dem Verdampferkörper ein Wärmerohr angeordnet, um Wärme aus dem Umsetzungsbereich dem Verdampferkörper zuzuführen. Mit einem solchen Wärmerohr, das häufig auch als Heatpipe bezeichnet wird, ist ein besonders guter Wärmetransport über ein verdampfendes und wieder kondensierendes Medium ermöglicht, sodass der Verdampfungsprozess sehr gezielt mit Wärme aus dem Umsetzungsbereich unterstützt werden kann.

Gemäß einer Weiterbildung ist an einem dem Umsetzungsbereich zugewandten Ende des Verdampferkörpers eine Abdeckung vorgesehen. In diesem Fall kann ein unkontrolliertes Austreten von Brennstoff an dem stirnseitigen Ende des Verdampferkörpers zuverlässig verhindert werden und die Strömung beim Eintritt in den Umsetzungsbereich kann gezielt eingestellt werden.

Gemäß einer Weiterbildung ist eine Stützluftzuführung vorgesehen, zum Zuführen eines Teils der Brennluft in einem Übergangsabschnitt, über den der Gemischaufbereitungsbereich in den Umsetzungsbereich übergeht. In diesem Fall werden eine zusätzliche Erhöhung der Strömungsgeschwindigkeit an dem Eintritt in den Umsetzungsbereich und eine besonders stabile Gemischaufbereitung erreicht.

Gemäß einer Weiterbildung ist ein Übergangsabschnitt, über den der Gemischaufbereitungsbereich in den Umsetzungsbereich übergeht, mit einer Querschnittsvariation zur Verbesserung des Abströmprofils versehen. In diesem Fall können auch bei ungünstigen äußeren Bedingungen besonders stabile Strömungsverhältnisse aufrechterhalten werden.

Die Aufgabe wird auch durch ein mobiles, mit flüssigem Brennstoff betriebenes Heizgerät mit einem solchen Verdampferbrenner gemäß Anspruch 14 gelöst.

Bevorzugt kann das mobile Heizgerät dabei als Fahrzeugheizgerät für eine Standheizung oder Zusatzheizung ausgebildet sein.

Weitere Vorteile und Weiterbildungen ergeben sich aus der nachfolgenden Beschreibung von Ausführungsbeispielen unter Bezugnahme auf die beigefügten Zeichnungen.
- Fig. 1: ist eine schematische Darstellung eines Verdampferbrenners gemäß einer Ausführungsform.
- Fig. 2: ist eine schematische vergrößerte Darstellung eines Axialkörpers mit einem an diesem angeordneten Verdampferkörper bei der Ausführungsform.
- Fig. 3: ist eine schematische Darstellung eines Axialkörpers mit einem an diesem angeordneten Verdampferkörper gemäß einer ersten Abwandlung.
- Fig. 4: ist eine schematische Darstellung eines Verdampferkörpers gemäß einer zweiten Abwandlung.
- Fig. 5: ist eine schematische Darstellung einer dritten Abwandlung mit einem elektrischen Heizelement.
- Fig. 6: ist eine schematische Darstellung einer vierten Abwandlung mit einem elektrischen Glühelement.
- Fig. 7: ist eine schematische Darstellung einer fünften Abwandlung mit einem elektrischen Heiz- und Glühelement.
- Fig. 8: ist eine schematische Darstellung einer sechsten Abwandlung mit einem elektrischen Heizelement.
- Fig. 9: ist eine schematische Darstellung einer siebten Abwandlung mit einem als Wärmeleitelement ausgebildeten Axialkörper.
- Fig. 10: ist eine schematische Darstellung einer achten Abwandlung mit einem als Wärmeleitelement ausgebildeten Axialkörper.
- Fig. 11: ist eine schematische Darstellung einer neunten Abwandlung mit einem hohlen Axial-körper.
- Fig. 12: ist eine schematische Darstellung einer zehnten Abwandlung.
- Fig. 13: ist eine schematische Darstellung einer elften Abwandlung.
- Fig. 14: ist eine schematische Darstellung eines Verdampferbrenners gemäß einer zweiten Ausführungsform.
- Fig. 15 a) bis d): sind schematische Darstellungen verschiedener Ausgestaltungen einer Stützluftzuführung zur Verbesserung des Betriebs des Verdampferbrenners.
- Fig. 16 a) bis e): sind schematische Darstellungen verschiedener Weiterbildungen eines Übergangsabschnittes.
- Fig. 17 a) bis i): sind schematische Darstellungen von Weiterbildungen der zweiten Ausführungsform.

### ERSTE AUSFÜHRUNGSFORM

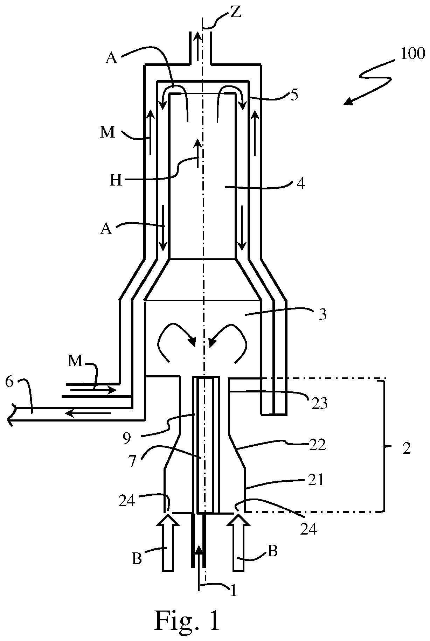

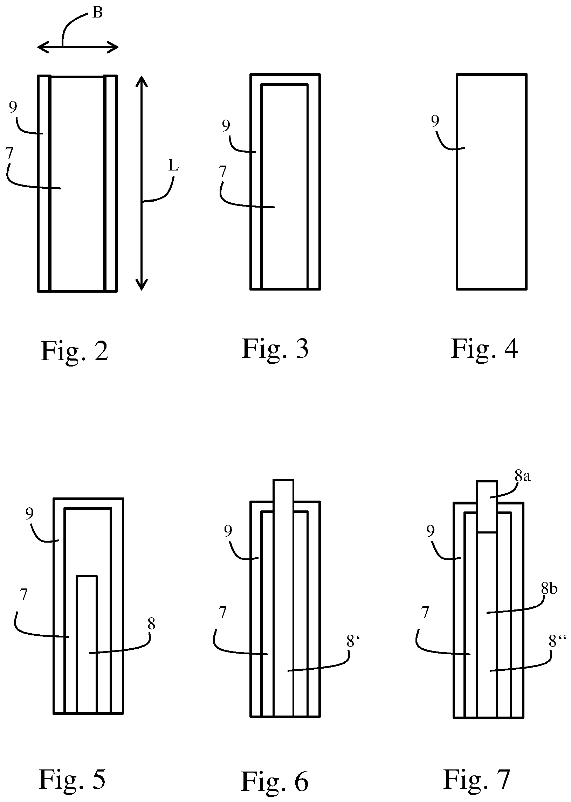

Eine erste Ausführungsform des Verdampferbrenners wird im Folgenden unter Bezug auf die Fig. 1 und Fig. 2 beschrieben.

Der Verdampferbrenner 100 gemäß der ersten Ausführungsform ist für ein mobiles, mit flüssigem Brennstoff betriebenes Heizgerät ausgebildet. Der Verdampferbrenner 100 ist dabei speziell für ein Fahrzeugheizgerät ausgelegt, insbesondere für eine Standheizung oder Zusatzheizung eines Kraftfahrzeugs.

Der Verdampferbrenner 100 erstreckt sich entlang einer Längsachse Z. Der Verdampferbrenner 100 weist einen Gemischaufbereitungsbereich 2 auf, der eine Hauptkammer 21, einen an die Hauptkammer 21 anschließenden Verjüngungsbereich 22 und einen an den Verjüngungsbereich 22 anschließenden Übergangsabschnitt 23 aufweist. In dem Verjüngungsbereich 22 verjüngt sich der Querschnitt des Gemischaufbereitungsbereichs 2 in einer Hauptströmungsrichtung H, die im Wesentlichen parallel zu der Längsachse Z verläuft. Bei dem schematisch dargestellten Ausführungsbeispiel ist beispielhaft eine konische Ausbildung des Verjüngungsbereichs 22 dargestellt, es sind jedoch auch andere Ausgestaltungen möglich. Der Übergangsabschnitt 23 bildet einen Übergang zu dem sich an den Gemischaufbereitungsbereich 2 anschließenden Umsetzungsbereich 3, der bei der Ausführungsform als eine Brennkammer ausgebildet ist. Der Umsetzungsbereich 3 ist dabei strömungstechnisch dem Gemischaufbereitungsbereich 2 nachgeordnet, wie aus der folgenden Beschreibung noch detaillierter hervorgeht. Der Übergangsabschnitt 23 weist bei der Ausführungsform eine im Wesentlichen zylindrische Form mit einem überwiegend konstanten Querschnitt auf. Der Übergangsabschnitt 23 kann jedoch auch eine andere Form aufweisen.

An dem Übergang von dem Übergangsabschnitt 23 des Gemischaufbereitungsbereichs 2 zu dem Umsetzungsbereich 3 ist eine abrupte Querschnittserweiterung ausgebildet. Der für die in dem Verdampferbrenner 100 strömenden Gase zur Verfügung stehende Strömungsquerschnitt weitet sich an dem Übergang von dem Gemischaufbereitungsbereich 2 zu dem Umsetzungsbereich 3 somit abrupt auf.

In dem Umsetzungsbereich 3 findet im Betrieb des Verdampferbrenners 100 eine Umsetzung eines Brennstoff-Luft-Gemischs in einer flammenden Verbrennung unter Freisetzung von Wärme statt. Die bei dieser Umsetzung entstehenden Verbrennungsabgase A strömen durch ein an den Umsetzungsbereich 3 anschließendes Brennrohr 4 in einen Wärmetauscher 5, in dem zumindest ein Teil der freigesetzten Wärme auf ein zu erwärmendes Medium M übertragen wird. Obwohl bei dem konkreten Ausführungsbeispiel ein solches zusätzliches Brennrohr 4 vorgesehen ist, ist ein solches nicht zwingend. Es kann z.B. bei einer ausreichend langen Ausführung des Umsetzungsbereichs 3 auf den hier verjüngt dargestellten Bereich des Brennrohres 4 verzichtet werden. Bei der schematisch dargestellten Ausführungsform ist der Wärmetauscher 5 topfartig ausgebildet und die heißen Verbrennungsabgase A werden am Ende des Brennrohres 4 an dem Boden des Wärmetauschers 5 umgelenkt. Nach dem Umlenken strömen die Verbrennungsabgase A in einem zwischen einer Außenseite des Brennrohres 4 und einem Innenmantel des Wärmetauschers 5 ausgebildeten Strömungsraum zu einem Abgasauslass 6 ab.

Das zu erwärmende Medium M strömt in einem zwischen dem Innenmantel des Wärmetauschers 5 und einem Außenmantel des Wärmetauschers 5 gebildeten Strömungsraum, wie in Fig. 1 schematisch durch Pfeile dargestellt ist. Das zu erwärmende Medium M strömt dabei bei der Ausführungsform entgegengesetzt zu der Strömungsrichtung der Verbrennungsabgase A in dem Wärmetauscher 5, um eine möglichst gute Wärmeübertragung zu erzielen. Das zu erwärmende Medium M kann dabei insbesondere z.B. durch zu erwärmende Luft oder durch eine zu erwärmende Flüssigkeit, insbesondere die Kühlflüssigkeit in einem Kühlflüssigkeitskreislauf eines Fahrzeugs gebildet sein. Der Innenmantel des Wärmetauschers 5 ist aus einem Material mit hoher Wärmeleitfähigkeit gefertigt, um eine gute Wärmeübertragung von den heißen Verbrennungsabgasen A auf das zu erwärmende Medium M zu gewährleisten.

Im Folgenden wird die Ausgestaltung des Gemischaufbereitungsbereichs 2 bei dem ersten Ausführungsbeispiel eingehender beschrieben.

Der Verdampferbrenner 100 weist eine Brennstoffzuführung 1 zum Zuführen eines flüssigen Brennstoffs auf. Der flüssige Brennstoff kann dabei insbesondere durch einen Kraftstoff gebildet sein, der auch für den Betrieb eines Verbrennungsmotors des Fahrzeugs verwendet wird, insbesondere durch Benzin, Diesel, Ethanol oder Ähnliches. Die Brennstoffzuführung 1 ist in Fig. 1 lediglich schematisch durch eine Brennstoffzufuhrleitung und einen Pfeil dargestellt. Die Brennstoffzuführung 1 kann aber - in an sich bekannter Weise - auch eine Brennstofffördervorrichtung aufweisen, die insbesondere z.B. durch eine Brennstoffdosierpumpe gebildet sein kann. Die Brennstoffzuführung 1 ist dazu ausgebildet, in wohldefinierter Weise Brennstoff zu fördern und zu dosieren.

Die Brennstoffzuführung 1 mündet in dem Gemischaufbereitungsbereich 2. Bei der schematisch dargestellten Ausführungsform mündet die Brennstoffzuführung 1 dabei an einer Rückwand des Gemischaufbereitungsbereichs 2, die den Gemischaufbereitungsbereich 2 rückseitig verschließt. Seitlich ist der Gemischaufbereitungsbereich 2 durch eine Seitenwand begrenzt, die den Verlauf der Hauptkammer 21, des Verjüngungsbereichs 22 und des Übergangsabschnitts 23 bestimmt.

Es ist ferner eine Brennluftzuführung B vorgesehen, die in Fig. 1 lediglich schematisch durch einen Pfeil dargestellt ist. Die Brennluftzuführung B weist ein (nicht dargestelltes) Brennluftgebläse zum Fördern von Brennluft zu dem Gemischaufbereitungsbereich 2 auf. Der Gemischaufbereitungsbereich 2 weist eine Mehrzahl von Brennlufteintritten 24 auf, durch die die Brennluft in den Gemischaufbereitungsbereich 2 eintreten kann. Bei dem Ausführungsbeispiel wird die Brennluft mit einem großen Drall, d.h. mit einer großen tangentialen Strömungskomponente in den Gemischaufbereitungsbereich 2 eingeleitet. Der Drall kann der Brennluft dabei z.B. über entsprechend ausgerichtete Leitschaufeln oder Ähnliches aufgeprägt werden. Obwohl in Fig. 1 schematisch eine Anordnung dargestellt ist, bei der die Brennlufteintritte 24 radial außenliegend an der Rückwand des Gemischaufbereitungsbereichs 2 angeordnet sind, sind auch andere Anordnungen möglich. Z.B. können die Brennlufteintritte auch seitlich an der Seitenwand des Gemischaufbereitungsbereichs 2 angeordnet sein.

Bei der Ausführungsform ist in dem Gemischaufbereitungsbereich 2 ein Axialkörper 7 angeordnet, der sich ausgehend von der Rückwand des Gemischaufbereitungsbereichs 2 beabstandet zu der Seitenwand des Gemischaufbereitungsbereichs 2 entlang der Längsachse Z erstreckt. Der Axialkörper 7 ist bei der ersten Ausführungsform stabförmig und aus einem nicht-porösen Material ausgebildet. Der Axialkörper 7 weist eine im Wesentlichen zylindrische Form auf und erstreckt sich bei der ersten Ausführungsform durch die Hauptkammer 21, den Verjüngungsbereich 22 und den Übergangsabschnitt 23. Der Axialkörper 7 ist im Wesentlichen mittig bezüglich seiner radialen Ausrichtung in dem Gemischaufbereitungsbereich 2 angeordnet. Der Axialkörper 7 weist eine Außenumfangsoberfläche auf, an der ein Verdampferkörper 9 aus einem porösen, saugfähigen Material angeordnet ist. Der Verdampferkörper 9 kann dabei insbesondere ein Metallvlies, eine Metallgewebe, einen metallischen oder keramischen Sinterkörper oder Ähnliches aufweisen. Bevorzugt kann der Verdampferkörper 9 den Axialkörper 7 dabei über dessen ganzen Außenumfang umgreifen.

Obwohl in Fig. 1 und Fig. 2 schematisch eine Realisierung dargestellt ist, bei der sich der Verdampferkörper 9 im Wesentlichen über die gesamte axiale Länge des Axialkörpers 7 erstreckt, ist es z.B. auch möglich, dass sich der Verdampferkörper 9 nur über einen Teilbereich des Axialkörpers 7 erstreckt. Aufgrund der beschriebenen Ausgestaltung erstreckt sich der Verdampferkörper 9 somit turmförmig in den Gemischaufbereitungsbereich 2. Der Verdampferkörper 9 erstreckt sich dabei ausgehend von der Rückwand des Gemischaufbereitungsbereichs 2 beabstandet zu der Seitenwand des Gemischaufbereitungsbereichs 2 entlang der Längsachse Z. Bei der Ausführungsform hat der Verdampferkörper 9 dabei eine im Wesentlichen hohlzylindrische Form und liegt fest an dem Axialkörper 7 an. In einer besonders bevorzugten Ausgestaltung ist der Verdampferkörper 9 stoffschlüssig mit dem Material des Axialkörpers 7 verbunden. Dies kann z.B. durch Versintern oder Verschweißen erfolgen. Eine stoffschlüssige Verbindung durch Versintern ist bevorzugt, da in diesem Fall die Poren der kapillar-porösen Struktur weitestgehend erhalten werden können. In dem Fall des stoffschlüssigen Verbunds ist ein besonders guter Wärmeübergang von dem Axialkörper 7 auf den Verdampferkörper 9 ermöglicht. Durch die stoffschlüssige Verbindung kann die Formstabilität des Verdampferkörpers 9 über die gesamte Lebensdauer zuverlässig gewährleistet werden und die Verdampfungsrate kann durch den guten Wärmeübergang und Wärmeeintrag in die Flüssigkeit gesteigert werden.

Der zugeführte flüssige Brennstoff wird an der Rückwand des Gemischaufbereitungsbereichs 2 von der Brennstoffzuführung 1 an den Verdampferkörper 9 übergeben, in dem eine Verteilung des flüssigen Brennstoffs erfolgt. Die Brennstoffzuführung 1 mündet dabei unmittelbar dem Verdampferkörper 9 gegenüberliegend. Aufgrund der porösen, saugfähigen Ausgestaltung des Verdampferkörpers 9 verteilt sich der flüssige Brennstoff dabei sowohl in der Umfangsrichtung des Verdampferkörpers 9 als auch in der axialen Richtung des Verdampferkörpers 9. Ausgehend von dem Verdampferkörper 9 verdampft der zugeführte flüssige Brennstoff und wird in dem Gemischaufbereitungsbereich 2 mit der zugeführten Brennluft vermischt, die entlang der Oberfläche des Verdampferkörpers 9 strömt. Durch die Zuführung der Brennluft mit einem großen Drall erfolgt dabei bereits eine gute Durchmischung des verdampften Brennstoffs mit Brennluft zu einem Brennstoff-Luft-Gemisch. Die Brennluft umströmt den Verdampferkörper 9 dabei mit einer tangentialen Strömungskomponente. Die Länge L des Verdampferkörpers 9 in der axialen Richtung übersteigt wesentlich die Breite B des Verdampferkörpers 9 in der radialen Richtung senkrecht zu der axialen Richtung. Dabei ist unter der Breite B die maximale Ausdehnung in der radialen Richtung senkrecht zur axialen Richtung zu verstehen, die in dem Sonderfall eines zylindrischen Körpers mit kreisförmigem Querschnitt dem Durchmesser entspricht. Insbesondere gilt für das Verhältnis der Länge L zu der Breite B: L/B > 1,5. Bevorzugt gilt L/B > 2.

In dem Verjüngungsbereich 22 des Gemischaufbereitungsbereichs 2 erhöht sich aufgrund der Querschnittsverringerung die axiale Strömungsgeschwindigkeit des Brennstoff-Luft-Gemischs. An dem Übergang von dem Gemischaufbereitungsbereich 2 zu dem Umsetzungsbereich 3 erfolgt aufgrund der abrupten Querschnittserweiterung eine Aufweitung der Drallströmung des Brennstoff-Luft-Gemisches, wodurch sich die axiale Strömungsgeschwindigkeit verringert und sich in dem Zentrum des Umsetzungsbereichs 3 nahe der Längsachse Z ein axialer Rückströmungsbereich bzw. Rezirkulationsbereich ausbildet, in dem Gase entgegen der Hauptströmungsrichtung H strömen, sodass im Betrieb des Verdampferbrenners 100 eine Verankerung der Flamme in dem Umsetzungsbereich 3 erfolgt. Bei der Ausführungsform sind der Gemischaufbereitungsbereich 2 und der Umsetzungsbereich 3 somit sowohl räumlich als auch funktional separat ausgebildet.

Die Dimensionen des Verjüngungsbereichs 22, des Übergangsabschnitts 23 und des Übergangs zu dem Umsetzungsbereich 3 sind so auf die Drallströmung des Brennstoff-Luft-Gemischs abgestimmt, dass ein Rückschlagen der Flamme aus dem Umsetzungsbereich 3 in den Gemischaufbereitungsbereich 2 im normalen Heizbetrieb zuverlässig verhindert ist. Insbesondere wird die Brennluft mit einem ausreichend großen Drall zu dem Gemischaufbereitungsbereich 2 zugeführt, damit diese Bedingung erfüllt ist. Dabei wird sichergestellt, dass die Strömungsgeschwindigkeit in dem Übergangsabschnitt 23 so hoch ist, dass sich dort keine stabile Flamme ausbilden kann.

Der Axialkörper 7 weist eine hohe thermische Leitfähigkeit auf und ist als ein Wärmeleitelement ausgebildet, sodass im Betrieb des Verdampferbrenners 100 Wärme von dem in dem Umsetzungsbereich 3 stattfindenden Verbrennungsprozess über Wärmeleitung über den Axialkörper 7 zu dem Gemischaufbereitungsbereich 2 zurückgeleitet wird, um einen vorteilhaften Verdampfungsprozess des flüssigen Brennstoffs an dem Verdampferkörper 9 zu erzielen.

### ABWANDLUNGEN UND WEITERBILDUNGEN

Im Folgenden werden verschiedene Abwandlungen des Verdampferkörpers und des Axialkörpers unter Bezugnahme auf die Fig. 3 bis Fig. 13 beschrieben.

Da sich die übrigen Komponenten des Verdampferbrenners 100 bei den Abwandlungen nicht von der zuvor unter Bezug auf die Fig. 1 und Fig. 2 beschriebenen ersten Ausführungsform unterscheiden, werden diese zur Vermeidung von Wiederholungen nicht erneut beschrieben. Ferner sind sämtliche in Bezug auf die Ausführungsform zuvor beschriebenen Abwandlungen und Weiterbildungen, wie z.B. insbesondere die stoffschlüssige Verbindung des Verdampferkörpers 9 und des Axialkörpers 7, das angegebene Verhältnis von Länge zu Breite bei dem Verdampferkörper 9 usw. auch bei den im Folgenden beschriebenen Abwandlungen möglich. Ferner werden bei der Beschreibung der Abwandlungen für die entsprechenden Komponenten auch dieselben Bezugszeichen verwendet.

Die in Fig. 3 dargestellte Abwandlung der Anordnung aus Verdampferkörper 9 und Axialkörper 7 unterscheidet sich dadurch von der zuvor beschriebenen Ausführungsform, dass sich der Verdampferkörper 9 auch entlang des freien Endes des Axialkörpers 7 auf der dem Umsetzungsbereich 3 zugewandten Seite erstreckt. In diesem Fall steht auch die sich quer zu der Längsachse Z erstreckende Stirnseite des Axialkörpers 7 für eine Verdampfung des flüssigen Brennstoffs zur Verfügung.

Bei der in Fig. 4 schematisch dargestellten Abwandlung erstreckt sich der Verdampferkörper 9 nicht entlang des Außenumfangs eines Axialkörpers, sonder der Verdampferkörper 9 ist selbst als ein stabiler, im Wesentlichen zylindrischer Vollkörper ausgebildet, der keine zusätzliche Stützstruktur erfordert.

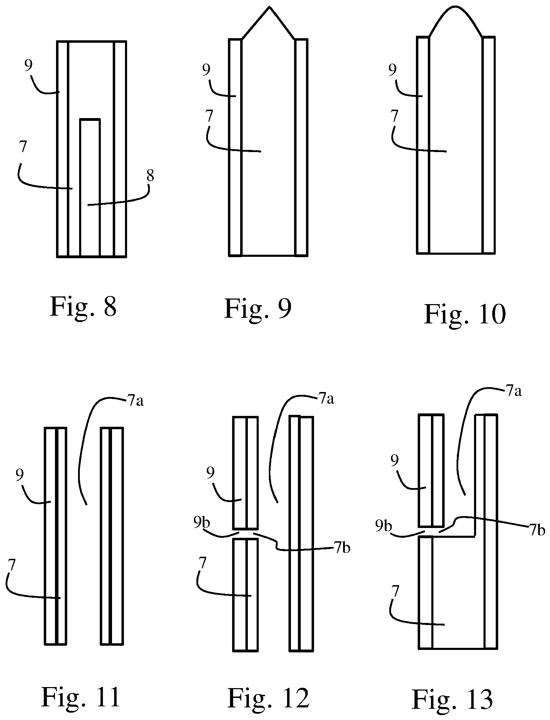

Der in Fig. 5 schematisch dargestellte Aufbau basiert auf dem in Fig. 3 beschriebenen Aufbau, bei dem in dem Inneren des Axialkörpers 7 ein elektrisches Heizelement 8 angeordnet ist. Ebenso basiert der in Fig. 8 schematisch dargestellte Aufbau auf dem in Fig. 2 dargestellten Aufbau, bei dem in dem Inneren des Axialkörpers 7 ein elektrisches Heizelement 8 angeordnet ist. Das elektrische Heizelement 8 ist in diesen Fällen jeweils als ein Widerstandheizelement ausgebildet und kann dabei insbesondere durch eine sogenannte Heizpatrone gebildet sein. Das elektrische Heizelement 8 ist dabei über entsprechende (nicht dargestellte) Anschlüsse mit einer elektrischen Leistungsversorgung verbunden, mit der ein Erwärmen des elektrischen Heizelements 8 ermöglicht ist. Auch bei diesen Abwandlungen ist der Axialkörper jeweils als ein Wärmeleitelement mit einer hohen Wärmeleitfähigkeit ausgebildet, um Wärme aus dem Umsetzungsbereich 3 über Wärmeleitung zu dem Verdampferkörper 9 zuzuführen. Durch das Vorsehen des elektrischen Heizelements 8 kann dem Verdampferkörper 9 gezielt zusätzliche Wärme zugeführt werden, um den Verdampfungsprozess zu unterstützen, z.B. bei einem Beginn des Heizbetriebs, wenn noch nicht ausreichend Wärme aus dem Umsetzungsbereich 3 zur Verfügung steht, oder um eine hohe Verdampfungsrate bei einer hohen Heizleistungsstufe bereitzustellen.

Die in Fig. 6 dargestellte Abwandlung unterscheidet sich darin von der in Fig. 5 dargestellten Ausgestaltung, dass anstelle des elektrischen Heizelements 8 ein elektrisches Glühelement 8' in dem Axialkörper 7 angeordnet ist. Das elektrische Glühelement 8' ist dabei derart angeordnet, dass es an der dem Umsetzungsbereich 3 zugewandten Stirnseite des Axialkörpers 7 über den Axialkörper 7 hinausragt. In dieser Weise kann auf ein separates Zündelement zum Starten des Umsetzungsprozesses des Brennstoff-Luft-Gemischs in dem Umsetzungsbereich 3 verzichtet werden und durch Erhitzen der Spitze des elektrischen Glühelements 8' kann der Umsetzungsprozess in Gang gesetzt werden. Das elektrische Glühelement 8' kann dabei insbesondere auch durch ein kombiniertes elektrisches Heiz- und Glühelement gebildet sein, das einerseits eine Förderung der Brennstoffverdampfung durch moderate Erwärmung ermöglicht und andererseits auch ein Starten des Umsetzungsprozesses durch eine starke Erhitzung ermöglicht. Gemäß einer in Fig. 7 schematisch dargestellten Weiterbildung kann das kombinierte Heiz- und Glühelement 8" dabei insbesondere segmentiert ausgebildet sein, bei dem ein dem Umsetzungsbereich 3 zugewandter Teilbereich 8a als ein Glühelement zum Starten des Umsetzungsprozesses in dem Umsetzungsbereich 3 ausgebildet ist und ein in dem Gemischaufbereitungsbereich 2 angeordneter zweiter Teilbereich 8b als ein Heizelement zum Unterstützen des Verdampfungsprozesses ausgelegt ist. Dabei kann der erste Teilbereich 8a insbesondere derart ausgelegt sein, dass er auf eine höhere Temperatur erwärmbar ist als der zweite Teilbereich 8b. Bevorzugt können der erste Teilbereich 8a und der zweite Teilbereich 8b des kombinierten Heiz- und Glühelements 8" dabei separat ansteuerbar ausgebildet sein.

Bei den in Fig. 9 und Fig. 10 dargestellten Abwandlungen der Ausführungsform ist der Axialkörper 7 auch jeweils als Wärmeleitelement zur Wärmerückführung durch Wärmeleitung aus dem Umsetzungsbereich 3 ausgebildet. Bei den dargestellten Abwandlungen ist dabei eine dem Umsetzungsbereich 3 zugewandte, freiliegende Stirnseite des Axialkörpers 7 jeweils konvex vorgewölbt ausgebildet, um eine bessere Wärmeeinkopplung in den Axialkörper 7 zu ermöglichen. Insbesondere in diesem Fall kann der Axialkörper 7 bevorzugt derart in dem Verdampferbrenner angeordnet sein, dass die Stirnseite des Axialkörpers 7 bis in den Umsetzungsbereich 3 ragt.

In Fig. 11 ist eine Abwandlung dargestellt, bei der der Axialkörper 7 nicht als massiver Vollkörper ausgebildet ist, sondern als ein im Wesentlichen rohrförmiger Hohlkörper mit einem inneren Hohlraum 7a, der in Richtung des Umsetzungsbereichs 3 offen ist. Bei der schematisch dargestellten Abwandlung ist der Axialkörper 7 dabei im Wesentlichen hohlzylindrisch ausgebildet und dient als Stützkörper für den auf der Außenumfangsfläche des Axialkörpers 7 angeordneten Verdampferkörper 9. In Fig. 12 ist eine weitere, auf der Abwandlung von Fig. 11 aufbauende Abwandlung dargestellt, bei der in der Wandung des Axialkörpers 7 seitliche Durchbrechungen 7b vorgesehen sind, die mit seitlichen Durchbrechungen 9b in dem Verdampferkörper 9 korrespondieren. In diesem Fall ist eine Rückführung von Verbrennungsabgasen aus dem zentralen Rezirkulationsbereich in dem Umsetzungsbereich 3 durch den inneren Hohlraum 7a und die Durchbrechungen 7b und 9b zu dem Gemischaufbereitungsbereich 2 ermöglicht. Die in Fig. 13 schematisch dargestellte Abwandlung unterscheidet sich von der in Fig. 12 dargestellten Abwandlung im Wesentlichen nur darin, dass der Axialkörper 7 nicht über seine gesamte Länge mit einem inneren Hohlraum 7a versehen ist, sondern sich der innere Hohlraum 7a ausgehend von der dem Umsetzungsbereich 3 zugewandten Stirnseite des Axialkörpers 7 nur über einen Teil von dessen axialer Länge erstreckt. Bei der konkret dargestellten Ausgestaltung erstreckt sich der innere Hohlraum 7a dabei nur bis zu den Durchbrechungen 7b und 9b.

Obwohl lediglich in Bezug auf einige der Abwandlungen das Vorsehen eines elektrischen Heizelements, eines elektrischen Glühelements oder eines kombinierten Heiz- und Glühelements beschrieben wurde, können auch bei den anderen Abwandlungen entsprechende Elemente vorgesehen werden.

Als eine weitere Weiterbildung kann insbesondere in dem Axialkörper 7 ferner auch ein Wärmerohr, auch als Heatpipe bezeichnet, angeordnet werden, um den Wärmetransport von dem Umsetzungsbereich 3 zu dem Gemischaufbereitungsbereich 2 über den Axialkörper 7 weiter zu verstärken. Bei einem solchen Wärmerohr erfolgt der Wärmetransport über ein in dem Wärmerohr verdampfendes und wieder kondensierendes Medium.

### ZWEITE AUSFÜHRUNGSFORM

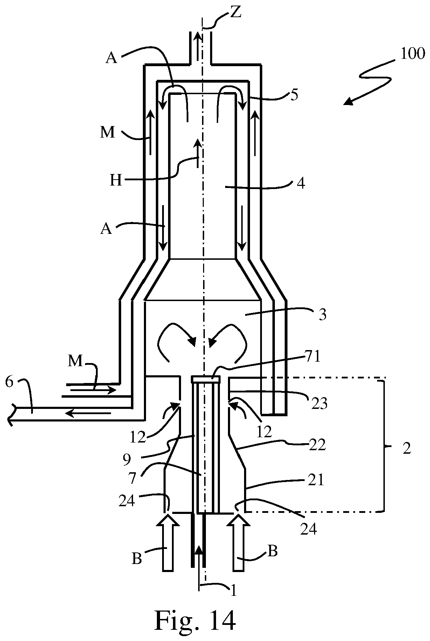

In Fig. 14 ist eine zweite Ausführungsform des Verdampferbrenners 100 schematisch dargestellt. Der Verdampferbrenner gemäß der zweiten Ausführungsform unterscheidet sich nur darin von der zuvor beschriebenen ersten Ausführungsform, dass der Axialkörper 7 an seinem dem Umsetzungsbereich 3 zugewandten freien Ende mit einer zusätzlichen Abdeckung 71 versehen ist und dass im Bereich des Übergangsabschnittes 23 eine zusätzliche Stützluftzuführung 12 vorgesehen ist. Da sich die weiteren Komponenten nicht von der zuvor beschriebenen ersten Ausführungsform unterscheiden, werden in Bezug auf die zweite Ausführungsform dieselben Bezugszeichen wie bei der ersten Ausführungsform verwendet und zur Vermeidung von Wiederholungen wird nicht der gesamte Aufbau des Verdampferbrenners 100 erneut beschrieben.

Obwohl bei der im Folgenden beschriebenen zweiten Ausführungsform sowohl die zusätzliche Abdeckung 71 als auch die zusätzliche Stützluftzuführung 12 realisiert sind, ist es gemäß einer weiteren Abwandlung z.B. auch möglich, nur die Abdeckung 71 oder nur die Stützluftzuführung 12 zusätzlich vorzusehen.

Die Abdeckung 71 ist an dem freien Ende des Axialkörpers 7 derart angeordnet, dass flüssiger Brennstoff und auch übermäßiger Brennstoffdampf nicht an der Stirnseite des Axialkörpers 7 in der axialen Richtung austreten kann, sondern gezwungen wird, in der radialen Richtung aus dem Verdampferkörper 9 auszutreten. Wie in Fig. 14 schematisch dargestellt ist, ist an der freien Stirnseite des Axialkörpers 7 eine Abdeckung 71 vorgesehen, die in der radialen Richtung von dem Außenumfang des restlichen Axialkörpers 7 hervorsteht und die freie Stirnseite des Verdampferkörpers 9 bedeckt. Die Abdeckung 71 ist aus einem zumindest im Wesentlichen dichten Material gebildet, sodass flüssiger Brennstoff und Brennstoffdampf nicht durch die Abdeckung 71 hindurchtreten können. Bevorzugt kann die Abdeckung 71 aus Metall gebildet sein, insbesondere aus temperaturbeständigem Edelstahl. Die Abdeckung 71 kann z.B. als eine separate Abdeckscheibe ausgebildet sein, die unlösbar oder lösbar an dem stirnseitigen Ende des Axialkörpers 7 befestigt ist. In einer anderen Ausgestaltung ist es z.B. auch möglich, die Abdeckung 71 einstückig mit dem Axialkörper 7 aus demselben Material herzustellen.

Durch die Abdeckung 71 wird verhindert, dass Brennstoff oder Brennstoffdampf insbesondere vermehrt an dem freien Ende des Axialkörpers 7 aus dem Verdampferkörper 9 austritt. In dieser Weise wird erreicht, dass der Brennstoff zumindest im Wesentlichen vollständig zur Ausbildung des Brennstoff-Luft-Gemischs in dem Gemischaufbereitungsbereich 2 zugeführt wird. Somit wird die Gemischaufbereitung in dem Gemischaufbereitungsbereich 2 weiter verbessert. Ferner wird eine negative Beeinflussung der Flammenverankerung in dem Umsetzungsbereich 3 verhindert.

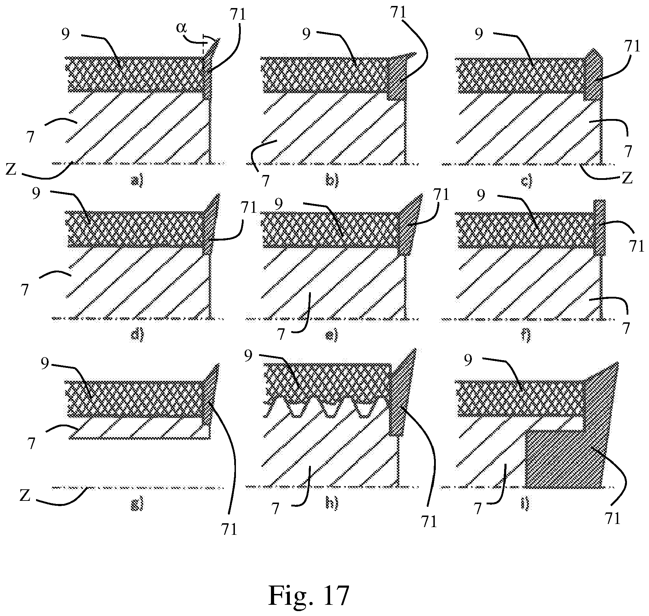

In den Fig. 17 a) bis i) sind verschiedene weitere Abwandlungen der Abdeckung 71 schematisch dargestellt. Auch diese weiteren Abwandlungen der Abdeckung 71 können jeweils sowohl bei einem im Wesentlichen massiven Axialkörper 7 als auch bei einem Axialkörper 7 mit einem inneren Hohlraum, wie er in den Fig. 11 bis 13 dargestellt ist, vorgesehen werden.

Gemäß den in den Fig. 17 a) bis i) dargestellten weiteren Abwandlungen der Abdeckung 71 steht die Abdeckung 71 in der radialen Richtung jeweils über den Außenumfang des Verdampferkörpers 9 hervor und stellt eine zumindest im Wesentlichen scharfe Abrisskante für die entlang dem Außenumfang des Axialkörpers 7 und des Verdampferkörpers 9 strömende Strömung bereit. Wie in Fig. 17 a) schematisch dargestellt ist, erstreckt sich der in der radialen Richtung hervorstehende Bereich der Abdeckung 71 unter einem Winkel α zu einer Ebene die senkrecht zu der Längsachse Z verläuft. Der Winkel α kann dabei - je nach der gewünschten Strömungsführung - einen Wert zwischen 0° und 90° aufweisen.

Bei der in Fig. 17 a) schematisch dargestellten Abwandlung erstreckt sich der in der radialen Richtung hervorstehende Bereich der Abdeckung 71 z.B. unter einem Winkel α im Bereich zwischen 35° und 45°, sodass die an dem Außenumfang des Verdampferkörpers 9 strömenden Gase dort relativ stark nach radial außen abgelenkt werden. Ferner ist bei dieser Abwandlung der hervorstehende Bereich als eine sich in der radiale Richtung verjüngende Lippe ausgebildet, die sowohl in der radialen als auch in der axialen Richtung hervorsteht. Der hervorstehende Bereich ist dabei zu dem Rest der Abdeckung 71 leicht in Richtung der Hauptströmungsrichtung H abgewinkelt ausgebildet.

Bei der in Fig. 17 b) schematisch dargestellten Abwandlung erstreckt sich der in der radialen Richtung hervorstehende Bereich der Abdeckung 71 unter einem deutlich größeren Winkel α, der zwischen 160° und 170° beträgt, sodass eine deutlich geringere radiale Ablenkung der an dem Außenumfang des Verdampferkörpers 9 strömenden Gase auftritt.

Bei der in Fig. 17 c) schematisch dargestellten Abwandlung erstreckt sich der in der radialen Richtung hervorstehende Bereich der Abdeckung z.B. unter einem Winkel zwischen ca. 40° und 50°. Ferner ist bei dieser Abwandlung der hervorstehende Bereich der Abdeckung 71 auch auf der von dem Verdampferkörper 9 abgewandten Seite angefast bzw. abgeschrägt, um den Strömungsabriss gezielt zu beeinflussen.

Bei den in den Fig. 17 d) und 17 e) schematisch dargestellten Abwandlungen weist die Abdeckung 71 jeweils insgesamt einen eher keilförmigen Querschnitt auf, sodass der hervorstehende Bereich der Abdeckung 71 - anders als bei den Abwandlungen der Fig. 17 a) und Fig. 17 b) - nicht gegenüber dem Rest der Abdeckung 71 abgewinkelt ausgebildet ist. Wie durch einen Vergleich der Abwandlungen gemäß den Fig. 17 a) und b) und der Abwandlungen gemäß den Fig. 17 d), 17 e) und 17 i) ersichtlich ist, kann der Keilwinkel des radial hervorstehenden Bereichs der Abdeckung 71 in dieser Weise gezielt eingestellt werden.

Bei der in Fig. 17 f) schematisch dargestellten Abwandlung ist die Abdeckung 71 als eine im Wesentlichen ringförmige Scheibe an dem Ende des Axialkörpers 7 ausgebildet, sodass der hervorstehende Bereich der Abdeckung unter einem Winkel α von ca. 0° seitlich hervorsteht.

Bei der in Fig. 17 g) schematisch dargestellten Abwandlung ist der Axialkörper 7 mit einem inneren Hohlraum versehen, der in Richtung des Umsetzungsbereiches 3 offen ausgebildet ist. In diesem Fall können z.B. Gase aus dem Umsetzungsbereich 3 in das Innere des Axialkörpers 7 einströmen. Diese zusätzlichen Merkmale können z.B. auch bei den anderen Abwandlungen vorgesehen werden.

In Fig. 17 h) ist beispielhaft eine Oberflächenstrukturierung des Außenumfangs des Axialkörpers 7 dargestellt. Eine solche kann auch bei den anderen Darstellungen gemäß den Fig. 17 a) bis g) und i) bevorzugt ebenfalls vorhanden sein. Bei der Abwandlung von Fig. 17 h) liegt die Abdeckung 71 ferner in einem radial innenliegenden Bereich unmittelbar stirnseitig an dem Verdampferkörper 9 an und verläuft unter einem Winkel α von ca. 0°. Ein weiter außen liegender Bereich der Abdeckung 71 verläuft hingegen unter einem größeren Winkel α, sodass wiederum eine radial vorspringende, sich verjüngende Lippe ausgebildet ist. Ferner liegt in einem radial außenliegenden Bereich des Verdampferkörpers 9 die Abdeckung 71 in diesem Fall nicht unmittelbar an dem Verdampferkörper 9 an. Auch diese ergänzenden Merkmale der Abwandlung von Fig. 17 h) können ferner auch bei den anderen Abwandlungen realisiert werden.

Bei der in Fig. 17 i) schematisch dargestellten Abwandlung ist die Abdeckung 71 als ein Einsatz ausgebildet, der mit einem zentralen vorspringenden Zapfen in eine stirnseitige Ausnehmung des Axialkörpers 7 eingesetzt ist. Auch diese weiteren Merkmale können jeweils auch bei den anderen Abwandlungen realisiert werden.

Die Ausgestaltung der Abdeckung 71 mit der beschriebenen Abrisskante hat den weiteren Vorteil, dass die Strömung an dem Eintritt in den Umsetzungsbereich 3 noch besser stabilisiert wird. Unter anderem kann in dieser Weise die Ausbildung von Pulsationen unterdrückt werden. Ferner kann ein Rückschlagen der Flamme in den Gemischaufbereitungsbereich 2 noch zuverlässiger verhindert werden. Insgesamt kann ferner durch die Abwandlungen der Abdeckung 71 mit der beschriebenen Abrisskante für die Strömung des Brennstoff-Luft-Gemischs insbesondere auch die Ausbildung des Rezirkulationsbereiches in dem Umsetzungsbereich 3 zusätzlich noch weiter stabilisiert werden.

Im Unterschied zu der zuvor beschriebenen ersten Ausführungsform wird bei der zweiten Ausführungsform die zugeführte Brennluft aufgeteilt, sodass ein Teil der zugeführten Brennluft nicht über die Brennlufteintritte 24 in die Hauptkammer 21 des Gemischaufbereitungsbereichs 2 zugeführt wird, sondern erst weiter stromabwärts bezüglich der Hauptströmungsrichtung H. Die Aufteilung der zugeführten Brennluft kann dabei in konstruktiv einfacher Weise über die Ausgestaltung der Strömungswege für die Brennluft realisiert werden. Wie in Fig. 14 schematisch dargestellt ist, ist bei der zweiten Ausführungsform eine Stützluftzuführung 12 vorgesehen, über die ein Teil der Brennluft erst in dem Übergangsabschnitt 23 zu dem Gemischaufbereitungsbereich 2 zugeführt wird. Die Ausgestaltung ist dabei derart gewählt, dass der überwiegende Teil der Brennluft über die Brennlufteintritte 24 in die Hauptkammer 21 zugeführt wird und nur ein kleiner Teil der Brennluft, der insbesondere bevorzugt weniger als 10 Prozent der Brennluftmenge betragen kann, über die Stützluftzuführung 12 zugeführt wird. Die Stützluftzuführung 12 ist in dem Bereich angeordnet, in dem der Gemischaufbereitungsbereich 2 in den Umsetzungsbereich 3 übergeht. Die Stützluftzuführung 12 ermöglicht eine zusätzliche Stabilisierung der Strömungsverhältnisse in dem Verdampferbrenner 100.

Die Stützluftzuführung 12 bewirkt eine zusätzliche Beschleunigung des in den Umsetzungsbereich 3 strömenden Brennstoff-Luft-Gemischs und stellt sicher, dass die Aufbereitung des Gemischs auch im Fall von unerwünschten Schwankungen und Sekundäreffekten stabil bleibt. Bei der konkret dargestellten Ausgestaltung bewirkt die Stützluftzuführung 12 ferner, dass die Hauptströmung des Brennstoff-Luft-Gemischs in dem Übergangsabschnitt 23 entlang dem Axialkörper 7 verläuft, und verhindert somit ein zu frühes Ablösen der Strömung von dem Axialkörper 7. In dieser Weise wird bei der zweiten Ausführungsform ein Rückschlagen oder Rückbrennen einer Flamme aus dem Umsetzungsbereich 3 in den Gemischaufbereitungsbereich 2 noch zuverlässiger verhindert.

Da in dieser Weise die Strömungsverhältnisse zusätzlich stabilisiert werden, wird ferner eine gleichmäßigere Temperaturverteilung in dem Gemischaufbereitungsbereich 2 erreicht, die sich positiv auf die Belastung und Lebensdauer der Bauteile auswirkt.

Obwohl in Fig. 14 beispielhaft eine sehr einfache konstruktive Ausgestaltung der Stützluftzuführung 12 dargestellt ist, sind verschiedene geometrische Ausgestaltungen möglich. Insbesondere kann die geometrische Ausgestaltung in einfacher Weise verändert werden, um die gewünschten Strömungsverhältnisse und den gewünschten Anteil der durch die Stützluftzuführung 12 zugeführten Brennluft einzustellen.

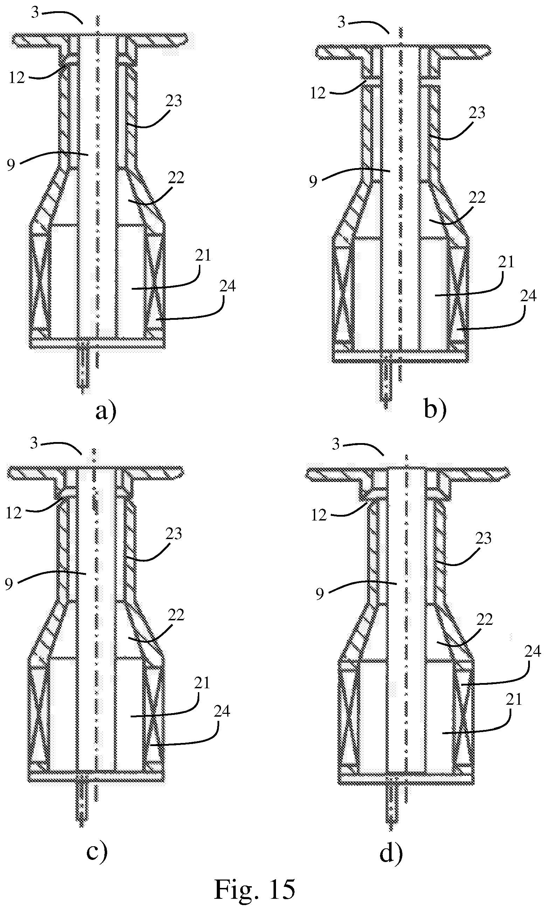

In den Fig. 15 a) bis d) sind verschiedene mögliche Ausgestaltungen der Stützluftzuführung 12 schematisch dargestellt. In der schematischen Darstellung der Fig. 15 a) bis d) ist jeweils ein Verdampferkörper 9 dargestellt, der sich nicht an dem Außenumfang eines Axialkörpers 7 erstreckt, sondern selbst als ein stabiler Vollkörper ausgebildet ist. Es ist aber wie bei den zuvor beschriebenen Ausführungsformen und deren Abwandlungen jeweils möglich, dass der Verdampferkörper 9 an dem Außenumfang eines Wärmeleitkörpers 7 angeordnet ist. Außerdem sind in den Fig. 15 a) bis d) schematisch Brennlufteintritte 24 an der Seitenwand der Hauptkammer 21 dargestellt. Es ist alternativ dazu aber wiederum auch eine Anordnung der Brennlufteintritte 24 wie bei den Ausführungsformen möglich. Ferner ist in den Fig. 15 a) bis d) lediglich ein Ausschnitt des Verdampferbrenners 100 in dem Bereich des Gemischaufbereitungsbereichs 2 dargestellt.

Die verschiedenen Ausgestaltungen der Stützluftzuführung 12 in den Fig. 15 a) bis d) unterscheiden sich in der konkreten Ausgestaltung der Austrittsöffnungen für die Stützluft. Während in Fig. 15 a) eine Realisierung gezeigt ist, bei der die Stützluft im Wesentlichen rotationssymmetrisch sowohl in radialer als auch in axialer Richtung zugeführt wird, ist in Fig. 15 b) eine Realisierung gezeigt, bei der die Stützluft im Wesentlichen in der radialen Richtung zugeführt wird. Es ist zu beachten, dass die Stützluft gegebenenfalls jeweils zusätzlich auch noch eine tangentiale Strömungskomponente aufweisen kann. Die Austrittsöffnungen für die Stützluft können z.B. als ein durchgehender Schlitz oder eine Mehrzahl von Durchbrechungen in der Wandung des Übergangsabschnittes 23 ausgebildet sein. Wie in Fig. 15 c) schematisch dargestellt ist, kann z.B. der an den Umsetzungsbereich 3 angrenzende Bereich des Übergangsabschnittes 23 auch leicht versetzt gegenüber dem Rest des Übergangsabschnittes 23 angeordnet sein, um eine exzentrische Zuführung der Stützluft zu realisieren. Ferner ist es z.B. auch möglich, dass der an den Umsetzungsbereich 3 angrenzende Bereich des Übergangsabschnittes 23 einen etwas größeren Durchmesser aufweist, um die Strömungsführung gezielt zu beeinflussen, wie es z.B. in Fig. 15 d) schematisch dargestellt ist. Ferner ist es z.B. auch möglich, die Stützluftzuführung nicht rotationssymmetrisch sondern gezielt asymmetrisch auszubilden, um die Strömungsführung zusätzlich zu modulieren, wodurch eine weitere Stabilisierung der Umsetzung in dem Umsetzungsbereich 3 und eine Unterdrückung von Schwingungen ermöglicht werden.

Es ist ferner zu beachten, dass bei sämtlichen Abwandlungen, bei denen der Verdampferkörper 9 an dem Außenumfang eines Axialkörpers 7 angeordnet ist, auch die zuvor in Bezug auf die zweite Ausführung beschriebene zusätzliche Abdeckung 71 vorgesehen sein kann.

### WEITERBILDUNGEN

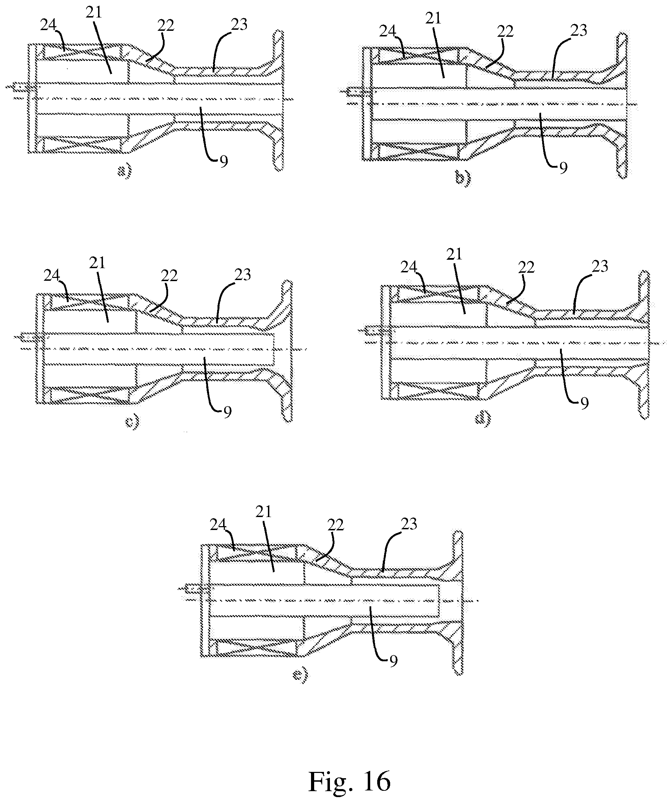

In den Fig. 16 a) bis e) sind verschiedene Weiterbildungen des Übergangsabschnittes 23 des Gemischaufbereitungsbereichs 2 dargestellt, die sowohl bei der ersten Ausführungsform und deren Abwandlungen als auch bei der zweiten Ausführungsform vorgesehen werden können.

In den schematischen Darstellungen der Fig. 16 a) bis e) ist wiederum ein stabiler Verdampferkörper 9 ohne Axialkörper 7 dargestellt, es ist aber wie bei den zuvor beschriebenen Ausführungsformen jeweils möglich, dass der Verdampferkörper 9 an dem Außenumfang eines Axialkörpers 7 angeordnet ist. Ferner kann in diesem Fall auch eine zusätzliche Abdeckung 71 vorgesehen sein, wie es mit Bezug auf die zweite Ausführungsform beschrieben wurde. Alternativ zu der in den Fig. 16 a) bis e) dargestellten Anordnung der Brennlufteintritte 24, können die Brennlufteintritte auch wiederum wie bei den zuvor beschriebenen Ausführungsformen angeordnet sein. Ferner ist in den Fig. 16 a) bis e) wieder lediglich ein Ausschnitt des Verdampferbrenners 100 in dem Bereich des Gemischaufbereitungsbereichs 2 dargestellt und die Darstellung ist um 90 Grad verdreht zu den vorhergehenden Darstellungen.

Die in den Fig. 16 a) bis e) schematisch dargestellten Weiterbildungen des Übergangsabschnittes 23 ermöglichen nochmals eine Verbesserung und Stabilisierung der Strömungsverhältnisse. Insbesondere kann durch diese Veränderung der Kontur an dem Übergang zu dem Umsetzungsbereich 3 noch zuverlässiger verhindert werden, dass die Flamme aus dem Umsetzungsbereich 3 in den Gemischaufbereitungsbereich 2 zurückschlägt.

Gemäß einer in Fig. 16 a) schematisch dargestellten ersten Ausgestaltung kann der unmittelbar an den Umsetzungsbereich 3 angrenzende Bereich des Übergangsabschnittes 23, d.h. der am weitesten stromabwärts gelegene Bereich des Übergangsabschnittes 23, sich leicht aufweitend ausgebildet sein, insbesondere z.B. konisch aufweitend, um ein verbessertes Abströmprofil zu erreichen. Gemäß einer in Fig. 16b) schematisch dargestellten Ausgestaltung verjüngt sich der Innenquerschnitt des Übergangsabschnittes 23 zunächst, bevor er sich in dem unmittelbar an den Umsetzungsbereich 3 angrenzenden Bereich ebenfalls wieder aufweitet. In diesem Fall wird die Strömungsgeschwindigkeit durch die Verjüngung nochmals erhöht, sodass ein Rückbrennen bzw. Rückschlagen der Flamme noch zuverlässiger verhindert ist. Bei der in Fig. 16 c) dargestellten Ausgestaltung weitet sich der unmittelbar an den Umsetzungsbereich 3 angrenzende Bereich des Übergangsabschnittes 23 in zwei Stufen auf, insbesondere z.B. jeweils konisch mit in Strömungsrichtung zunächst einem kleineren Kegelwinkel und anschließend einem größeren Kegelwinkel.

Bei der in Fig. 16 d) dargestellten weiteren Weiterbildung verjüngt sich der Innenquerschnitt des Übergangsabschnittes 23 in dem unmittelbar an den Umsetzungsbereich 3 angrenzenden Bereich, um die Strömungsgeschwindigkeit zu erhöhen, wobei z.B. eine konische Verjüngung realisiert sein kann. Bei der in Fig. 16 e) schematisch dargestellten Ausgestaltung weist der Übergangsabschnitt 23 anschließend an einen sich verjüngenden Bereich unmittelbar angrenzend an den Umsetzungsbereich 3 ferner noch einen Auslauf mit konstantem Querschnitt auf.

Bei den in den Fig. 16 c) und Fig. 16 e) dargestellten Weiterbildungen ist der Verdampferkörper 9 (bzw. der Axialkörper 7 mit dem an diesem angeordneten Verdampferkörper 9) jeweils etwas verkürzt ausgebildet, sodass er sich nicht über die gesamte Länge des Gemischaufbereitungsbereiches 2 erstreckt, sondern in Bezug auf die Hauptströmungsrichtung H bereits kurz vor dem Ende des Gemischaufbereitungsbereiches 2 endet. Der Verdampferkörper 9 (bzw. der Axialkörper 7 mit dem Verdampferkörper 9) ist somit bei diesen Weiterbildungen etwas in den Auslauf des Gemischaufbereitungsbereiches 2 zurückgezogen ausgebildet.

Die verschiedenen beschriebenen geometrischen Ausgestaltungen können auch noch miteinander kombiniert werden, um die gewünschten Strömungsverhältnisse je nach der Dimensionierung der anderen Bereiche einzustellen.

Obwohl in Bezug auf die Ausführungsformen beschrieben wurde, dass sich der Axialkörper 7 durch den gesamten Gemischaufbereitungsbereich 2 bis zumindest in den Übergangsabschnitt 23 erstreckt, was bevorzugt ist, da in dieser Weise ein Zurückschlagen der Flamme in den Gemischaufbereitungsbereich 2 besonders zuverlässig verhindert werden kann, ist es z.B. auch möglich, den Axialkörper 7 kürzer auszubilden, sodass er sich nicht oder nur teilweise bis in den Übergangsabschnitt 23 zu dem Umsetzungsbereich 3 erstreckt. Ferner ist es andererseits auch möglich, den Axialkörper 7 derart auszubilden, dass er sich bis in den Umsetzungsbereich 3 erstreckt. In diesem Fall ist eine verbesserte Wärmeleitung aus dem Umsetzungsbereich 3 über den Axialkörper 7 zu dem Verdampferkörper 9 ermöglicht.

## Patentansprüche

1. Verdampferbrenner (100) für ein mobiles, mit flüssigem Brennstoff betriebenes Heizgerät mit:
einem Gemischaufbereitungsbereich (2) zum Mischen von Brennstoff mit Brennluft zu einem Brennstoff-Luft-Gemisch,
einer Brennstoffzuführung (1) zum Zuführen flüssigen Brennstoffs zu dem Gemischaufbereitungsbereich (2),
einer Brennluftzuführung (B) zum Zuführen von Brennluft zu dem Gemischaufbereitungsbereich (2),
einem dem Gemischaufbereitungsbereich (2) strömungstechnisch nachgeordneten Umsetzungsbereich (3) zum Umsetzen des Brennstoff-Luft-Gemischs unter Freisetzung von Wärme, und
einem Verdampferkörper (9) zum Verdampfen des flüssigen Brennstoff, der sich in dem Gemischaufbereitungsbereich (2) beabstandet von einer Seitenwand des Gemischaufbereitungsbereichs (2) in einer axialen Richtung erstreckt und eine als Brennstoffverdampfungsoberfläche ausgebildete Außenumfangsfläche aufweist, die derart angeordnet ist, dass sie von der zugeführten Brennluft umströmt wird,
wobei sich ein Axialkörper (7) in dem Gemischaufbereitungsbereich (2) entlang einer Längsachse (Z) erstreckt und der Verdampferkörper (9) an einer Außenumfangsfläche des Axialkörpers (7) angeordnet ist.

2. Verdampferbrenner nach Anspruch 1, wobei sich der Verdampferkörper (9) ausgehend von einer Rückwand des Gemischaufbereitungsbereichs (2) in der axialen Richtung erstreckt.

3. Verdampferbrenner nach Anspruch 1 oder 2, wobei der Verdampferkörper (9) turmförmig ausgebildet ist.

4. Verdampferbrenner nach einem der vorangehenden Ansprüche, wobei der Verdampferkörper (9) eine im Wesentlichen zylindrische oder hohlzylindrische Form aufweist.

5. Verdampferbrenner nach einem der vorangehenden Ansprüche, wobei der Verdampferkörper (9) eine Länge L in der axialen Richtung und eine Breite B senkrecht zu der axialen Richtung aufweist, für die gilt: L/B > 1,5, bevorzugt L/B > 2.

6. Verdampferbrenner nach einem der vorangehenden Ansprüche, wobei in dem Verdampferkörper (9) ein elektrisches Heiz- und/oder Glühelement (8; 8', 8") angeordnet ist.

7. Verdampferbrenner nach einem der vorangehenden Ansprüche, wobei der Verdampferkörper (9) stoffschlüssig mit der Außenumfangsfläche des Axialkörpers (7) verbunden ist.

8. Verdampferbrenner nach einem der vorangehenden Ansprüche, wobei der Axialkörper (7) als Wärmeleitelement ausgebildet ist, um Wärme aus dem Umsetzungsbereich (3) über Wärmeleitung dem Verdampferkörper (9) zuzuführen.

9. Verdampferbrenner nach einem der vorangehenden Ansprüche, wobei in dem Verdampferkörper (9) ein Wärmeleitelement angeordnet ist, um Wärme aus dem Umsetzungsbereich (3) über Wärmeleitung dem Verdampferkörper (9) zuzuführen.

10. Verdampferbrenner nach einem der Ansprüche 1 bis 8, wobei in dem Verdampferkörper (9) ein Wärmerohr angeordnet ist, um Wärme aus dem Umsetzungsbereich (3) dem Verdampferkörper (9) zuzuführen.

11. Verdampferbrenner nach einem der vorangehenden Ansprüche, wobei an einem dem Umsetzungsbereich zugewandten Ende des Verdampferkörpers (9) eine Abdeckung (71) vorgesehen ist.

12. Verdampferbrenner nach einem der vorangehenden Ansprüche, wobei eine Stützluftzuführung (12) vorgesehen ist, zum Zuführen eines Teils der Brennluft in einem Übergangsabschnitt (23), über den der Gemischaufbereitungsbereich (2) in den Umsetzungsbereich (3) übergeht.

13. Verdampferbrenner nach einem der vorangehenden Ansprüche, wobei ein Übergangsabschnitt (23), über den der Gemischaufbereitungsbereich (2) in den Umsetzungsbereich (3) übergeht, mit einer Querschnittsvariation zur Verbesserung des Abströmprofils versehen ist.

14. Mobiles, mit flüssigem Brennstoff betriebenes Heizgerät mit einem Verdampferbrenner nach einem der vorangehenden Ansprüche.

15. Mobiles, mit flüssigem Brennstoff betriebenes Heizgerät nach Anspruch 14, das als Fahrzeugheizgerät für eine Standheizung oder Zusatzheizung ausgebildet ist.

## Claims

1. An evaporator burner (100) for a mobile heating device operated with liquid fuel, having
a mixture preparation region (2) for the mixing of fuel with combustion air to form a fuel-air mixture,
a fuel supply (1) for the supply of liquid fuel to the mixture preparation region (2),
a combustion-air supply (B) for the supply of combustion air to the mixture preparation region (2),
a reaction region (3) which is arranged downstream of the mixture preparation region (2) in terms of flow and which serves for the reaction of the fuel-air mixture with a release of heat, and
an evaporator body (9) for the evaporation of the liquid fuel, which evaporator body extends in an axial direction in the mixture preparation region (2) so as to be spaced apart from a side wall of the mixture preparation region (2) and has an outer circumferential surface which is in the form of a fuel evaporation surface and which is arranged such that the supplied combustion air flows around said outer circumferential surface, wherein an axial body (7) extends along a longitudinal axis (Z) in the mixture preparation region (2), and the evaporator body (9) is arranged on an outer circumferential surface of the axial body (7).

2. The evaporator burner as claimed in claim 1, wherein the evaporator body (9) extends in the axial direction proceeding from a rear wall of the mixture preparation region (2).

3. The evaporator burner as claimed in claim 1 or 2, wherein the evaporator body (9) is of tower-like form.

4. The evaporator burner as claimed in one of the preceding claims, wherein the evaporator body (9) has a substantially cylindrical or hollow cylindrical form.

5. The evaporator burner as claimed in one of the preceding claims, wherein the evaporator body (9) has a length L in the axial direction and a width B perpendicular to the axial direction, for which the following applies: L/B > 1.5, preferably L/B > 2.

6. The evaporator burner as claimed in one of the preceding claims, wherein an electric heating and/or glow element (8; 8', 8") is arranged in the evaporator body (9).

7. The evaporator burner as claimed in one of the preceding claims, wherein the evaporator body (9) is material-to-material bonded to the outer circumferential surface of the axial body (7).

8. The evaporator burner as claimed in one of the preceding claims, wherein the axial body (7) is in the form of a heat-conducting element for supplying heat from the reaction region (3) to the evaporator body (9) by heat conduction.

9. The evaporator burner as claimed in one of the preceding claims, wherein a heat-conducting element is arranged in the evaporator body (9) for the purpose of supplying heat from the reaction region (3) to the evaporator body (9) by heat conduction.

10. The evaporator burner as claimed in one of claims 1 to 8, wherein a heatpipe is arranged in the evaporator body (9) for the purpose of supplying heat from the reaction region (3) to the evaporator body (9).

11. The evaporator burner as claimed in one of the preceding claims, wherein a cover (71) is provided on an end, facing toward the reaction region, of the evaporator body (9).

12. The evaporator burner as claimed in one of the preceding claims, wherein a supporting-air supply (12) is provided for the supply of a part of the combustion air in a transition section (23) via which the mixture preparation region (2) transitions into the reaction region (3).

13. The evaporator burner as claimed in one of the preceding claims, wherein a transition section (23) via which the mixture preparation region (2) transitions into the reaction region (3) is equipped with a cross-sectional variation for the purposes of improving the outflow profile.

14. A mobile heating device operated with liquid fuel, having an evaporator burner as claimed in one of the preceding claims.

15. The mobile heating device operated with liquid fuel as claimed in claim 14, which heating device is in the form of a vehicle heating device for an engine-independent heater or auxiliary heater.

## Revendications

1. Brûleur à vaporisation (100) pour un appareil de chauffage mobile fonctionnant avec un combustible liquide, comprenant :
une zone de préparation de mélange (2) pour mélanger le combustible avec de l'air de combustion pour former un mélange combustible-air, une alimentation en combustible (1) pour alimenter la zone de préparation de mélange (2) en combustible liquide,
une alimentation en air de combustion (B) pour alimenter la zone de préparation de mélange (2) en air de combustion,
une zone de réaction (3) en aval, du point de vue de la technique d'écoulement, de la zone de préparation de mélange (2), pour faire réagir le mélange combustible-air en dégageant de la chaleur, et
un corps d'évaporateur (9) pour évaporer le combustible liquide, qui s'étend dans une direction axiale dans la zone de préparation de mélange (2) à distance d'une paroi latérale de la zone de préparation de mélange (2) et qui présente une surface périphérique extérieure réalisée sous forme de surface d'évaporation de combustible qui est disposée de manière à être entourée par la circulation de l'air de combustion acheminé,
un corps axial (7) s'étendant dans la zone de préparation de mélange (2) le long d'un axe longitudinal (Z) et le corps d'évaporateur (9) étant disposé au niveau d'une surface périphérique extérieure du corps axial (7).

2. Brûleur à vaporisation selon la revendication 1, dans lequel le corps d'évaporateur (9) s'étend dans la direction axiale à partir d'une paroi arrière de la zone de préparation de mélange (2).

3. Brûleur à vaporisation selon la revendication 1 ou 2, dans lequel le corps de vaporisateur (9) est réalisé en forme de tour.

4. Brûleur à vaporisation selon l'une quelconque des revendications précédentes, dans lequel le corps de vaporisateur (9) présente une forme essentiellement cylindrique ou cylindrique creuse.

5. Brûleur à vaporisation selon l'une quelconque des revendications précédentes, dans lequel le corps de vaporisateur (9) présente une longueur L dans la direction axiale et une largeur B perpendiculairement à la direction axiale, pour lesquelles on a : L/B > 1,5, de préférence L/B > 2.

6. Brûleur à vaporisation selon l'une quelconque des revendications précédentes, dans lequel un élément électrique chauffant et/ou incandescent (8 ; 8', 8") est disposé dans le corps de vaporisateur (9) .

7. Brûleur à vaporisation selon l'une quelconque des revendications précédentes, dans lequel le corps de vaporisateur (9) est connecté par liaison de matière à la surface périphérique extérieure du corps axial (7).

8. Brûleur à vaporisation selon l'une quelconque des revendications précédentes, dans lequel le corps axial (7) est réalisé sous forme d'élément thermoconducteur afin d'acheminer par conduction thermique au corps d'évaporateur (9) de la chaleur provenant de la zone de réaction (3).

9. Brûleur à vaporisation selon l'une quelconque des revendications précédentes, dans lequel un élément thermoconducteur est disposé dans le corps d'évaporateur (9) afin d'acheminer par conduction thermique au corps d'évaporateur (9) de la chaleur provenant de la zone de réaction (3).

10. Brûleur à vaporisation selon l'une quelconque des revendications 1 à 8, dans lequel un tube caloporteur est disposé dans le corps d'évaporateur (9) afin d'acheminer au corps d'évaporateur (9) de la chaleur provenant de la zone de réaction (3).

11. Brûleur à vaporisation selon l'une quelconque des revendications précédentes, dans lequel un recouvrement (71) est prévu au niveau d'une extrémité du corps d'évaporateur (9) tournée vers la zone de réaction.

12. Brûleur à vaporisation selon l'une quelconque des revendications précédentes, dans lequel il est prévu une alimentation en air additionnelle (12) pour acheminer une partie de l'air de combustion dans une portion de transition (23) par le biais de laquelle la zone de préparation de mélange (2) se prolonge dans la zone de réaction (3).

13. Brûleur à vaporisation selon l'une quelconque des revendications précédentes, dans lequel une portion de transition (23) par le biais de laquelle la zone de préparation de mélange (2) se prolonge dans la zone de réaction (3) est prévue avec une variation de section transversale pour améliorer le profil d'écoulement.

14. Appareil de chauffage mobile fonctionnant avec un combustible liquide comprenant un brûleur à vaporisation selon l'une quelconque des revendications précédentes.

15. Appareil de chauffage mobile fonctionnant avec un combustible liquide selon la revendication 14, lequel est réalisé sous forme d'appareil de chauffage de véhicule pour un chauffage auxiliaire ou un chauffage d'appoint.
